# EUROPEAN PATENT APPLICATION

(11) **EP 2 840 785 A1**
(43) Date of publication of application: **25.02.2015**
(21) Application number: 13777817.1
(22) Date of filing: 28.02.2013
(51) Int. Cl.: H04N 7/18, H04B 17/00

(54) **TERAHERTZ WIRELESS COMMUNICATIONS-BASED PEER-MONITORING METHOD AND SYSTEM THEREOF**

(30) Priority: 20.04.2012 CN 201210117175
(71) Applicant: Huizhou TCL Mobile Communication Co., Ltd., Huizhou, Guangdong 516006 (CN)
(72) Inventor: WANG, Kailong, HuiZhou Guangdong 516006 (CN); LI, Xianglai, HuiZhou Guangdong 516006 (CN); GE, Qi, HuiZhou Guangdong 516006 (CN)
(74) Representative: Brachmann, Roland W.
(86) International application number: PCT/CN2013/071986
(87) International publication number: WO 2013/155900

(57) **Abstract**

Disclosed are a terahertz wireless communications-based peer-monitoring method and a system thereof. The system comprises at least two monitoring nodes. Each monitoring node is provided with a terahertz transceiver for use in transmitting and receiving monitoring data and connection request information. Each monitoring node is correspondingly connected to a control module for use in controlling the monitoring node and the terahertz transceiver. The present invention allows for increased transmission capacity and improved directionality of wireless communications, thus implementing peer communications of the monitoring nodes.

## Description

### FIELD OF THE INVENTION

The present invention relates to a monitoring method and a system, and in particular to a terahertz wireless communications-based peer-monitoring method and a system thereof.

### BACKGROUND OF THE INVENTION

Traditional wireless monitoring transmission manners comprise analog microwave video transmission, digital microwave video transmission, 3G wireless network monitoring and the like. Each monitoring device is called as a monitoring node. The monitoring node integrates the functions of image capturing and video displaying. And such monitoring devices as a display device, a camera and the like may be included. In an analog microwave transmission-based monitoring system, although there are less time delay and loss, the number of monitoring nodes and relay nodes are limited. In a digital microwave video transmission-based monitoring system and a 3G wireless network-based monitoring system, although the number of the monitoring nodes is not limited, the band widths of an uplink channel and a downlink channel are limited, and peer-communications cannot be implemented. Moreover, the monitoring images have longer delay, and the resolution is also limited.

Therefore, the prior art still needs to be improved and developed.

### SUMMARY OF THE INVENTION

The present invention aims at providing a terahertz wireless communications-based peer-monitoring method and a system thereof which can implement peer-communications of the monitoring nodes, and have transmission capacity and improved directionality.

The technical solution of the present invention is as follows.

A terahertz wireless communications-based peer-monitoring method, which comprises the following steps of:
A. acquiring, by at least two monitoring nodes, respective monitoring data, wherein each monitoring node is provided with a terahertz transceiver for use in transmitting and receiving terahertz signals, and each monitoring node has a unique self address;
B. transmitting, by any monitoring node, a connection request to at least one another monitoring node through the terahertz signals;
C. answering, by other monitoring node after receiving the connection request, and establishing a connection with the monitoring node transmitting the connection request;
D. transmitting, by other monitoring node that is required to be connected to, the respective monitoring data thereof to the monitoring node that transmits the connection request through the terahertz signals; and
E. reading through a display device, by the monitoring node that transmits the connection request, the monitoring data of other monitoring nodes that are required to be connected to.

A terahertz wireless communications-based peer-monitoring method, comprises the following steps of:
A. acquiring, by at least two monitoring nodes, respective monitoring data, wherein each monitoring node is provided with a terahertz transceiver for use in transmitting and receiving terahertz signals;
B. transmitting, by any monitoring node, a connection request to at least one another monitoring node through the terahertz signals;
C. answering, by other monitoring node after receiving the connection request, and establishing a connection with the monitoring node transmitting the connection request;
D. transmitting, by other monitoring node that is required to be connected to, the respective monitoring data thereof to the monitoring node that transmits the connection request through the terahertz signals; and
E. receiving and reading, by the monitoring node that transmits the connection request, the monitoring data transmitted by other monitoring nodes that are required to be connected to.

A terahertz wireless communications-based peer-monitoring system, comprises at least two monitoring nodes for use in acquiring respective monitoring data, wherein each monitoring node is provided with a terahertz transceiver for use in transmitting and receiving monitoring data and connection request information, and the system further comprises a control module for use in controlling the monitoring node and the terahertz transceiver.

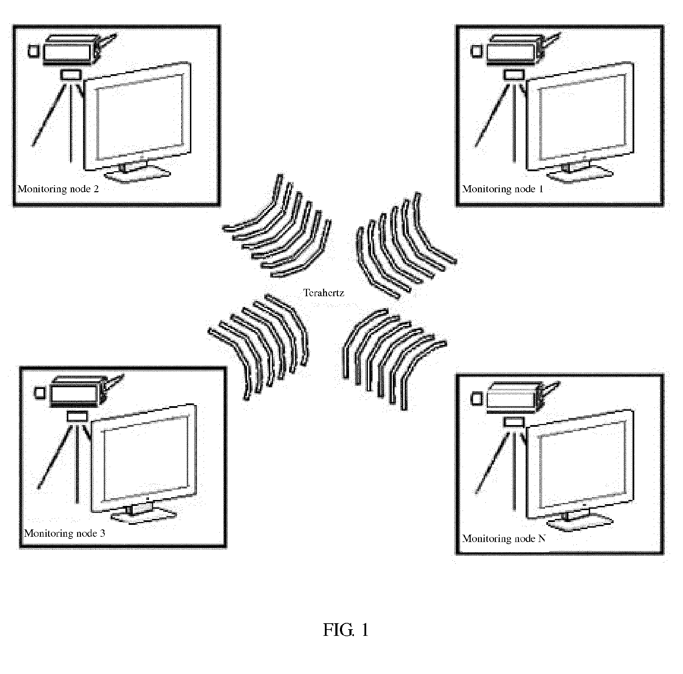

According to the terahertz wireless communications-based peer-monitoring method and the system thereof of the present invention, each monitoring node is provided with the terahertz transceiver for use in transmitting and receiving the monitoring data and the connection request information, so that one monitoring node can be connected to at least one another monitoring node. FIG.1 is an effect schematic view I of the terahertz wireless communications-based peer-monitoring system according to the present invention. That is, the monitoring data of any other one or multiple monitoring nodes can be acquired from any monitoring node so as to implement the function of peer-monitoring. Due to a terahertz transmission manner, the transmission capacity of the wireless communications is increased, the directionality of the wireless communications is improved, and the peer communications and dynamic networking of the monitoring nodes are better and more sufficiently implemented, thus bringing a fire-new business mode for the field of wireless monitoring.

### BRIEF DESCRIPTION OF DRAWINGS

- FIG.1: is an effect schematic view of a terahertz wireless communications-based peer-monitoring system according to the present invention;
- FIG.2: is a principle schematic view of the terahertz wireless communications-based peer-monitoring system according to the present invention;
- FIG.3: is a software schematic diagram of the terahertz wireless communications-based peer-monitoring system according to the present invention;
- FIG.4: is a schematic view of a preferred embodiment I of the terahertz wireless communications-based peer-monitoring system according to the present invention;
- FIG.5: is a schematic view of a preferred embodiment II of the terahertz wireless communications-based peer-monitoring system according to the present invention;
- FIG.6: is a state schematic view of a monitoring node in the terahertz wireless communications-based peer-monitoring system according to the present invention; and
- FIG.7: is a schematic view of a terahertz wireless communications-based peer-monitoring method according to the present invention.

### DETAILED DESCRIPTION OF THE EMBODIMENTS

The present invention provides a terahertz wireless communications-based peer-monitoring method and a system thereof. To make the objectives, technical solution and effects of the present invention more clearly, the present invention is further described in details with reference to the drawings and example embodiments. It should be understood that the specific embodiments described here are merely used for explaining the present invention, but are not intended to limit the present invention.

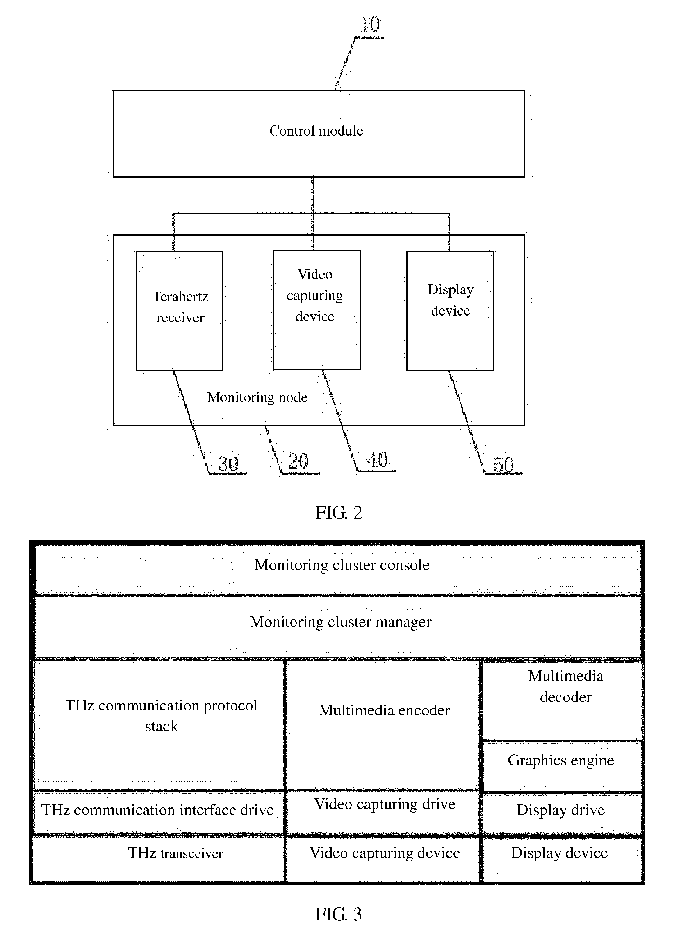

FIG.2 is a principle schematic view of the terahertz wireless communications-based peer-monitoring system according to the present invention. The terahertz wireless communications-based peer-monitoring system comprises at least two monitoring nodes 20 for use in acquiring respective monitoring data. Each monitoring node 20 is provided with a terahertz transceiver 30. The terahertz transceiver 30 is for use in transmitting and receiving the monitoring data and connection request information, establishing a positioning connection between the monitoring node that transmits a connection request and at least one another monitoring node through requesting and answering, and then transmitting and receiving the monitoring data through terahertz signals. That is, each monitoring node can broadcast a self address to other monitoring node through the terahertz transceiver 30 and read the positional information and monitoring data of other monitoring node. The monitoring node 20 may further be provided with a video capturing device 40 or an audio capturing device for use in acquiring the monitoring data. In the embodiment, the monitoring node 20 only comprises the video capturing device 40. A preferred solution is that the monitoring node is further provided with a display device 50 for use in displaying the monitoring data. The monitoring node 20 is connected to a control module 10. The control module 10 is for use in controlling the monitoring node 20. The terahertz transceiver 30, the video capturing device 40 and the display device 50 are all connected to the control module 10. A user may read the monitoring data of any one or multiple monitoring nodes at each monitoring node 20 through the control module 10.

Specifically, when the monitoring node that is required to be connected to after the positioning connection processes the acquired monitoring data thereof into a data packet applicable for terahertz transmission, and transmits the data packet to the monitoring node that transmits the connection request through the terahertz signals, the monitoring node that transmits the connection request after receiving the data packet, processes the data packet as a playable multimedia stream and plays the multimedia stream. This is the basic principle of terahertz transmitting and receiving.

FIG.3 is a software schematic diagram of the terahertz wireless communications-based peer-monitoring system according to the present invention. A hardware unit is arranged at the bottom layer, comprising a terahertz transceiver, a video capturing device and a display device. The terahertz transceiver is for use in receiving and transmitting terahertz wireless signals that carry a monitoring data stream. Usually the video capturing device is a camera.

Logical functions implemented through software are all on the hardware unit. A terahertz communication interface drive is responsible for controlling the terahertz transceiver to receive and transmit the monitoring data. A terahertz communication protocol stack is responsible for the data processing of such protocol layers as handshake, retransmission, packet disassembly and recombination. Both the video capturing device and the display device require corresponding drive software to work normally. The video capturing device is corresponding to a video capturing drive. The display device is corresponding to a display drive. A multimedia encoder is arranged above the video capturing drive. The multimedia encoder is responsible for acquiring monitoring frames in real time, compressing the monitoring frames into corresponding medium formats, and providing the monitoring frames to other monitoring node to use. A graphics engine and a multimedia decoder are arranged above the display drive. An original graph frame is obtained by decoding the monitoring stream received by the node, and is presented on the display device by the graphics engine in a single menu or multi-menu manner.

The control module comprises a monitoring cluster console and a monitoring cluster manager. The monitoring cluster manager is responsible for increasing or decreasing the nodes as well as controlling the transmitting and receiving of the monitoring data. The details comprise requesting and answering of increasing or decreasing the nodes, requesting and answering of connecting of the monitoring nodes as well as transmitting and receiving of the monitoring data. The monitoring cluster console is on the top layer. The monitoring cluster console allows for a user to control the behaviors of the monitoring node in a manner of graphical interface or command line. The behaviors comprise: appointing the monitoring node, adjusting multi-menu display effect, controlling a camera holder, and the like. The implementation of the software of the control module, the terahertz transceiver, the video capturing device and the display device are all known to those skilled in the art, so that the specific software implementation principles will not be repeatedly described any longer here.

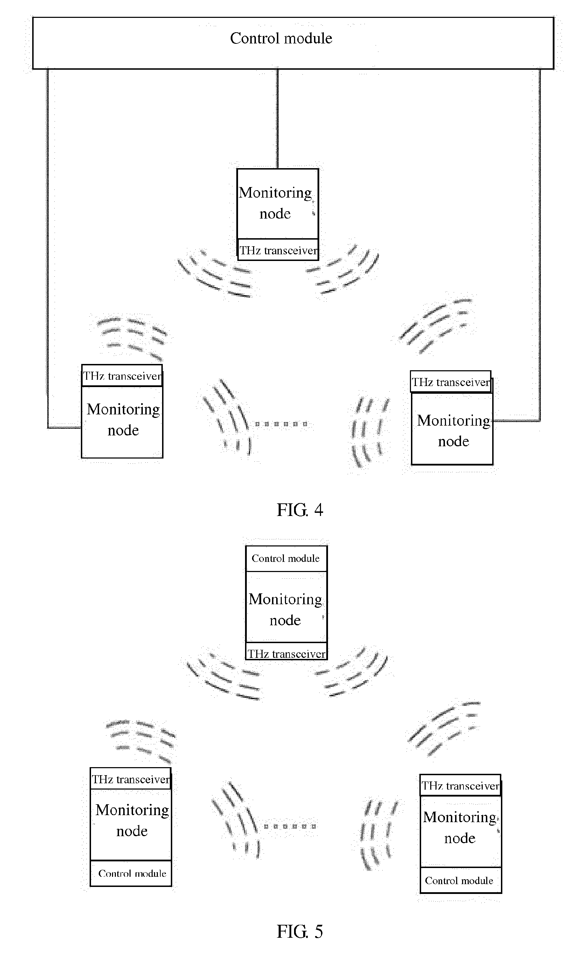

FIG.4 is a schematic view of a preferred embodiment I of the terahertz wireless communications-based peer-monitoring system according to the present invention. All the monitoring nodes may share one control module, and general control is carried out on all the monitoring nodes, so as to be capable of saving the cost of a monitoring network. That is, each monitoring node is connected to the control module. In this way, the user may either control the active state of each monitoring node such as closing or opening, or lock a certain monitoring node. Because the terahertz transceiver of each monitoring node may normally transmit and receive the monitoring data of other monitoring node, the user may also read the monitoring data of any monitoring node on each monitoring node.

Certainly, each monitoring node may be provided with one control module. As shown in FIG.5, each control module is correspondingly connected to one monitoring node and one terahertz transceiver. In this way, each monitoring node may really implement wireless communications. Each monitoring node may both exist in a completely independent manner and be mutually connected due to the terahertz transceiver.

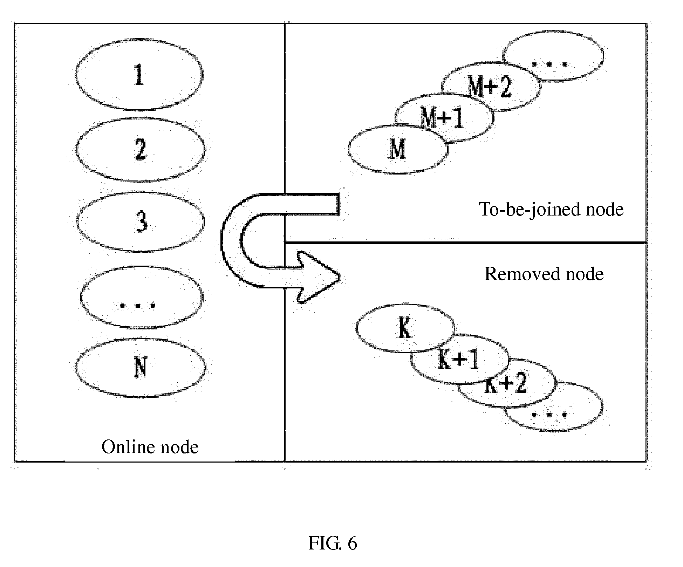

In the present invention, the number of the monitoring nodes can be freely increased and decreased. Positioning of each monitoring node is first required no matter for the change of the number of the monitoring nodes or for the transmission of the monitoring data, which is implemented by setting an address thereof, so that the monitoring nodes can be mutually recognized. That is, any two monitoring nodes transmit and receive a connection request first through terahertz. When the monitoring data of a certain monitoring node is required, it only needs to search the self address of the corresponding monitoring node, and then transmitting or receiving of the monitoring data is carried out. FIG.6 is a state schematic view of the monitoring node (hereafter referred to as "node") in the terahertz wireless communications-based peer-monitoring system according to the present invention. The left side refers to online node (1, 2, 3 ... N), which belong to active nodes. The right side refers to to-be-joined nodes (M, M+1, M+2, ...) and removed nodes (K, K+1, K+2, ...), which belong to non-active nodes. First, no monitoring node can become an online node unless going through a registration flow. The monitoring menus of the active nodes can viewed freely. If one node does not need to exist, the node may be removed as a non-active node. The working flow of the node comprises the following three steps.
I. Increase the nodes. Full address scanning is carried out on a specific subnet by the to-be-joined node through a broadcasting (terahertz transceiver) manner. Other nodes after receiving a scanning signal must respond until an unresponsive address is encountered, wherein the unresponsive address is used as a self address. That is, all the monitoring nodes have a unique self address for positioning and connecting conveniently, and accurately transmitting the connection request. Moreover, the node notifies the newly acquired address thereof to other active nodes. The address is similar to an IP address of the internet. Certainly, label information, such as detailed corridor position, can be increased for each node manually or automatically.
II. Request services. After the node is under an active state, if a menu monitoring request is transmit to any one effective address, a monitoring data stream may be received after answering interaction. One node may receive the monitoring data of a plurality of nodes at the same time, and present the monitoring data on the display device in a multi-menu manner.
III. Delete the node. When one node does not need to exist, a broadcasting command of quitting a monitoring cluster network may be transmitted, and other nodes after receiving the command consider the node unavailable. In order to handle the situation of abnormal offline, each node may also periodically transmit a broadcast for use in "heart beat" maintenance. If the broadcast of a certain node cannot be received after a plurality of periods, the node will also be considered under a removed state.

A peer-network is formed by a plurality of nodes, and the nodes communicate through terahertz. Being benefited by the high speed data stream of the terahertz, each node may view the captured menus of other nodes in real time with a high resolution. Moreover, viewing a plurality of nodes at the same time through a multi-menu split-screen manner is supported. The nodes are in a completely peer point-to-point relationship. The number of the nodes may be dynamically increased and decreased. Therefore, the flexibility and reliability of monitoring deployment are greatly increased.

In the terahertz wireless communications-based peer-monitoring system according to the present invention, each monitoring node may either be provided with a display device, or only provided with an interface for use in being connected to a display device. In this way, when the user needs to view the monitoring data of any monitoring node, the user can only need to connect the display device on the interface of one monitoring node, so that the cost and the installation space are saved.

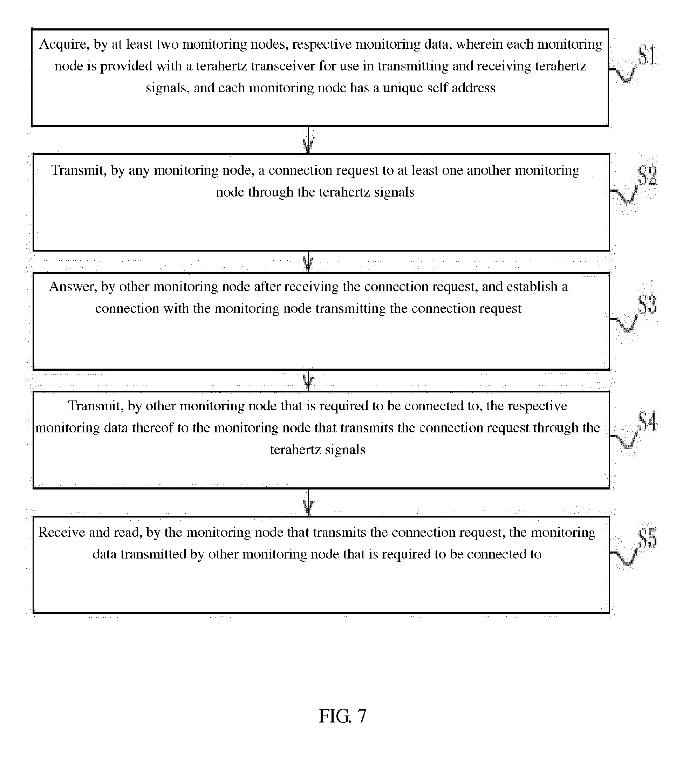

The present invention further discloses a terahertz wireless communications-based peer-monitoring method. As shown in FIG.7, the method comprises the following steps of:
Step S1: acquiring, by at least two monitoring nodes, respective monitoring data, wherein each monitoring node is provided with a terahertz transceiver for use in transmitting and receiving terahertz signals. A preferred solution is that each monitoring node comprises a terahertz transceiver, a video capturing device and a display device. The video capturing device is for use in acquiring the monitoring data of a video, and may also comprise the monitoring data of an audio. The display device is for use in displaying the monitoring data of the current monitoring node. The terahertz transceiver is for use in processing the monitoring data into a data packet that may implement terahertz transmission. For convenient positioning and connection, each monitoring node has a unique self address which is similar to an IP address of the internet. This is the public prior art and will not be repeatedly described here.
Step S2: transmitting, by any monitoring node, a connection request to at least one another monitoring node through the terahertz signals. Specifically, the content of the connection request comprises the self address of the monitoring node that is required to be connected to. That is to say each monitoring node may implement that a plurality of monitoring nodes are connected in one monitoring nodes.
Step S3: answering, by other monitoring node after receiving the connection request, and establishing a connection with the monitoring node transmitting the connection request. For details refer to the foregoing descriptions on the working flow of the nodes.
Step S4: transmitting, by other monitoring node that is required to be connected to, the respective monitoring data thereof to the monitoring node that transmits the connection request through the terahertz signals.
Specifically, other monitoring node that is required to be connected to, processes the respective monitoring data into a data packet suitable for terahertz signal transmission, and transmits the data packet to the monitoring node that transmits the connection request through the terahertz signals.
Step S5: receiving and reading, by the monitoring node that transmits the connection request, the monitoring data transmitted by other monitoring node that is required to be connected to. Because the general monitoring data is video information, the monitoring node that transmits the connection request may read the monitoring data of other monitoring node that is required to be connected to through the display device.

The monitoring data when being transmitted through the terahertz signals requires early stage processing. Specifically, the monitoring node that transmits the connection request, after receiving the data packet, processes the data packet into monitoring data suitable for reading, which namely processes the data packet into a playable multimedia stream and plays the multimedia stream.

The monitoring node that transmits the connection request reads the monitoring data transmitted by other monitoring node that is required to be connected to. Specifically, the monitoring data may be read through the display device.

According to the method of the present invention, reading of the monitoring data of any other one or multiple monitoring nodes may be implemented through the method of the present invention. That is, peer-monitoring is implemented, which solves the restriction of the traditional monitoring method that for each monitoring node, only the monitoring data of the monitoring node may be viewed, and is convenient for better monitoring of the user. Moreover, an interface for use in being connected to a display device may be arranged on each monitoring node without needing to arrange one display device for each monitoring node independently. When the user needs to monitor at this position, the user may directly connect one display device to the interface to view the monitoring data of any monitoring node, which greatly increases the monitoring efficiency and saves the cost.

Both the terahertz wireless communications-based peer-monitoring method and the system thereof disclosed by the present invention are implemented based on terahertz. The wireless monitoring using the terahertz breaks out the restriction of other wireless communications manners, and may implement flexible cluster monitoring based on ensuring the monitoring menu quality and time delay. In addition, the parity between the monitoring nodes may be really implemented, so that the monitoring nodes can be dynamically increased and decreased and serve as a monitoring service platform, so that each monitoring node is endowed with safer networking performance and intellectuality.

It should be understood that a person having ordinary skill in the art may improve or transform the present invention according to the foregoing descriptions. All improvements and transformations shall fall within the protection scope of the claims of the present invention.

## Claims

1. A terahertz wireless communications-based peer-monitoring method, comprising the following steps of:
A. acquiring, by at least two monitoring nodes, respective monitoring data, wherein each monitoring node is provided with a terahertz transceiver for use in transmitting and receiving terahertz signals, and each monitoring node has a unique self address;
B. transmitting, by any monitoring node, a connection request to at least one another monitoring node through the terahertz signals;
C. answering, by other monitoring node after receiving the connection request, and establishing a connection with the monitoring node transmitting the connection request;
D. transmitting, by other monitoring nodes that are required to be connected to, the respective monitoring data thereof to the monitoring node that transmits the connection request through the terahertz signals; and
E. reading, by the monitoring node that transmits the connection request, the monitoring data of other monitoring node that is required to be connected to through a display device.

2. The terahertz wireless communications-based peer-monitoring method according to claim 1, wherein in the step B, the content of the connection request comprises the self address of the monitoring node that is required to be connected to.

3. The terahertz wireless communications-based peer-monitoring method according to claim 1, wherein the step D comprises:
D1, processing, by other monitoring node that is required to be connected to, the respective monitoring data into a data packet suitable for terahertz signal transmission, and transmitting the data packet to the monitoring node that transmits the connection request through the terahertz signals.

4. The terahertz wireless communications-based peer-monitoring method according to claim 3, wherein the step E further comprises:
E1, processing, by the monitoring node that transmits the connection request, the data packet into monitoring data suitable for reading after receiving the data packet; and
E2, reading, by the monitoring node that transmits the connection request, the monitoring data transmitted by other monitoring node that is required to be connected to.

5. The terahertz wireless communications-based peer-monitoring method according to claim 1, wherein the monitoring data in the step A comprises audio data.

6. The terahertz wireless communications-based peer-monitoring method according to claim 1, wherein the monitoring data in the step A comprises video data.

7. A terahertz wireless communications-based peer-monitoring method, comprising the following steps of:
A. acquiring, by at least two monitoring nodes, respective monitoring data, wherein each monitoring node is provided with a terahertz transceiver for use in transmitting and receiving terahertz signals;
B. transmitting, by any monitoring node, a connection request to at least one another monitoring node through the terahertz signals;
C. answering, by other monitoring node after receiving the connection request, and establishing a connection with the monitoring node transmitting the connection request;
D. transmitting, by other monitoring node that is required to be connected to, the respective monitoring data thereof to the monitoring node that transmits the connection request through the terahertz signals; and
E. receiving and reading, by the monitoring node that transmits the connection request, the monitoring data transmitted by other monitoring node that is required to be connected to.

8. The terahertz wireless communications-based peer-monitoring method according to claim 7, wherein in the step A, each monitoring node has a unique self address.

9. The terahertz wireless communications-based peer-monitoring method according to claim 8, wherein in the step B, the content of the connection request comprises the self address of the monitoring node that is required to be connected to.

10. The terahertz wireless communications-based peer-monitoring method according to claim 7, wherein the step D comprises:
D1, processing, by other monitoring node that is required to be connected to, the respective monitoring data into a data packet suitable for terahertz signal transmission, and transmitting the data packet to the monitoring node that transmits the connection request through the terahertz signals.

11. The terahertz wireless communications-based peer-monitoring method according to claim 10, wherein the step E further comprises:
E1. processing, by the monitoring node that transmits the connection request, the data packet into monitoring data suitable for reading after receiving the data packet; and
E2. reading, by the monitoring node that transmits the connection request, the monitoring data transmitted by other monitoring node that is required to be connected to.

12. The terahertz wireless communications-based peer-monitoring method according to claim 7, wherein the monitoring data in the step A comprises audio data.

13. The terahertz wireless communications-based peer-monitoring method according to claim 7, wherein the monitoring data in the step A comprises video data.

14. The terahertz wireless communications-based peer-monitoring method according to any one of claims 7 to 13, wherein the step E further comprises:
E3. reading, by the monitoring node that transmits the connection request, the monitoring data of other monitoring node that is required to be connected to through a display device.

15. A terahertz wireless communications-based peer-monitoring system, comprising at least two monitoring nodes for use in acquiring respective monitoring data, wherein each monitoring node is provided with a terahertz transceiver for use in transmitting and receiving monitoring data and connection request information, and the system further comprises a control module for use in controlling the monitoring node and the terahertz transceiver.

16. The terahertz wireless communications-based peer-monitoring system according to claim 15, wherein one control module is arranged, and the control module is connected to the monitoring node and the terahertz transceiver.

17. The terahertz wireless communications-based peer-monitoring system according to claim 15, wherein each monitoring node is correspondingly connected to one control module for use in controlling the monitoring node and the terahertz transceiver.

18. The terahertz wireless communications-based peer-monitoring system according to any one of claims 15 to 17, wherein the monitoring node comprises a video capturing device connect to the control module.

19. The terahertz wireless communications-based peer-monitoring system according to any one of claims 15 to 17, wherein the monitoring node comprises an audio capturing device connect to the control module.

20. The terahertz wireless communications-based peer-monitoring system according to claims 15 to 17, wherein the monitoring node further comprises a display device for use in displaying the monitoring data.
